(19) Europäisches Patentamt
European Patent Office
Office européen des brevets

(11) **EP 3 053 970 B1**

(12) **EUROPEAN PATENT SPECIFICATION**

(45) Date of publication and mention of the grant of the patent:
**09.12.2020 Bulletin 2020/50**

(21) Application number: **14849348.9**

(22) Date of filing: **19.09.2014**

(51) Int Cl.:
*C09D 11/16* (2014.01)    *B43K 8/02* (2006.01)
*C09D 11/18* (2006.01)    *C09D 11/14* (2006.01)
*B43K 8/00* (2006.01)    *B43K 7/00* (2006.01)

(86) International application number:
**PCT/JP2014/074824**

(87) International publication number:
**WO 2015/046048 (02.04.2015 Gazette 2015/13)**

(54) **AQUEOUS INK COMPOSITION FOR WRITING INSTRUMENTS**

WÄSSRIGE TINTENZUSAMMENSETZUNG FÜR SCHREIBINSTRUMENTE

COMPOSITION D'ENCRE AQUEUSE POUR INSTRUMENTS D'ÉCRITURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2013 JP 2013203137**

(43) Date of publication of application:
**10.08.2016 Bulletin 2016/32**

(73) Proprietor: **Mitsubishi Pencil Co., Ltd.**
**Tokyo 140-8537 (JP)**

(72) Inventors:
• **NISHIJIMA Chihiro**
**Yokohama-shi**
**Kanagawa 221-8550 (JP)**

• **SAKANE Noriko**
**Yokohama-shi**
**Kanagawa 221-8550 (JP)**
• **TAKEUCHI Yoji**
**Yokohama-shi**
**Kanagawa 221-8550 (JP)**

(74) Representative: **Vossius & Partner**
**Patentanwälte Rechtsanwälte mbB**
**Siebertstrasse 3**
**81675 München (DE)**

(56) References cited:
**JP-A- 2010 001 381    JP-A- 2012 087 256**
**JP-A- 2013 103 986    JP-A- 2013 104 133**
**JP-A- 2013 181 167**

EP 3 053 970 B1

**Description**

Technical Field

The present invention relates to an aqueous ink composition for writing instruments which is excellent in storage stability of particles such as pigments, a writing property with the passage of time, and quality of the drawn lines, though having a low viscosity, as compared with conventional thickener and gelling agent such as xanthane gum showing thixotropy.

Background Art

Natural compounds, semisynthetic compounds obtained by chemical modification of natural compounds, and synthetic compounds chemically synthesized from petrochemical crude materials have so far been known as thickeners and gelling agents showing thixotropy which are used for ink compositions for writing instruments.

Known are, for example, ink compositions for aqueous ink ballpoint pens characterized by containing 0.20 to 0.45% by weight of xanthan gum as a natural thickener and gelling agent (refer to, for example, patent document 1), aqueous ink compositions characterized by containing alkaline metal salts or ammonium salts such as sodium carboxymethyl cellulose having an etherification degree of 1.5 or more which is obtained by chemical modification of cellulose as semisynthetic thickener and gelling agent (refer to, for example, patent document 2), and aqueous ink compositions for ballpoint pens containing polyethers, urethane-modified polyethers, and polyaminoplastol ethers as synthetic thickener and gelling agent (refer to, for example, patent document 3).

However, the existing situation is that the respective thickeners and gelling agents disclosed in above patent documents 1 to 3 have to be added in large amounts to the compositions in order to cause the particles such as pigments to exert storage stability and that thickeners and gelling agents involve the problem that the write feeling and fluidity are deteriorated.

On the other hand, products obtained by physical process of cellulose to fine matters are known as natural thickeners and the like derived from cellulose itself, and powder cellulose, fermented cellulose (bacterial cellulose) and the like are known. For example, ink compositions for aqueous ink ballpoint pens characterized by comprising at least water, a colorant and fermented cellulose are known as aqueous ink compositions prepared by utilizing of the above celluloses (refer to, for example, patent document 4).

However, the fermented cellulose used in the ink compositions for aqueous ink ballpoint pens shown in patent document 4 described above comprises fine fibrous particles and is added for enhancing the dry-up performance by forming a soft resin film (film of the cellulose fibers) at the tip of the pen, and a thixotropic agent (xanthane gum) is further used in combination for modifying the ink viscosity. Thus, the above ballpoint pens are different from those disclosed in the present invention in terms of a technical idea including the physical properties of the cellulose and the action mechanism thereof.

Patent document 5 relates to a specific aqueous ink composition containing the components (A) cellulose fibers having a number average fiber diameter of 2 to 150 nm, wherein the cellulose has a cellulose I-type crystal structure, and a hydroxyl group at the C6 position of each glucose unit in the cellulose molecule is selectively oxidized and modified to form an aldehyde group, ketone group or carboxyl group, the content of carboxyl group being 0.6 to 2.0 mmol/g, and the total content of aldehyde group and ketone group measured by the semicarbazide method being 0, (B) at least one of a coloring agent and a hiding agent, and (C) water.

Conventional Art Documents

Patent documents

Patent document 1: Japanese Patent Application Laid-Open No. Sho 59-74175 (claims, examples and others)
Patent document 2: Japanese Patent Application Laid-Open No. Sho 62-124170 (claims, examples and others)
Patent document 3: Japanese Patent Application Laid-Open No. 2002-235025 (claims, examples and others)
Patent document 4: Japanese Patent Application Laid-Open No. 2013-91730 (claims, examples and others)
Patent document 5: Japanese Patent Application Laid-Open No. 2013-181167 (claims, examples and others)

Disclosure of the Invention

Problem to be solved by the Invention

In light of the problems on the conventional art described above, the present invention attempts to solve the problems, and an object thereof is to provide an aqueous ink composition for a writing instrument which is excellent in storage stability of particles, a writing property with the passage of time, and quality of the drawn lines though having a low viscosity.

Means for solving Problem

In light of the conventional problems and the like described above, intense researches repeated by the present inventors have resulted in finding that an aqueous ink composition for a writing instrument which meets the object described above is obtained by using a natural thickener and gelling agent having specific physical properties since natural thickeners and gelling agents tend to be preferred from the viewpoints of the safety and consideration to the environment. Thus, the present invention has been come to complete.

That is, the present invention resides in following items (1) to (3).

(1) An aqueous ink composition for a writing instrument containing 0.1 to 1.0 % by mass of an oxidized cellulose and having a limiting viscosity of 10 mPa·s or less derived from Casson's equation.

(2) The aqueous ink composition for a writing instrument as described in the above item (1), wherein the oxidized cellulose has a number average fiber diameter of 2 to 150 nm.

(3) A writing instrument charged with the aqueous ink composition for a writing instrument as described in the above item (1) or (2).

Effect of the Invention

According to the present invention, provided is an aqueous ink composition for writing instruments which is excellent in storage stability of particles such as pigments, writing property with the passage of time, and quality of the drawn lines though having a low viscosity as compared with conventional thickener and gelling agent such as xanthane gum.

BRIEF DESCRIPTION of THE DRAWINGS

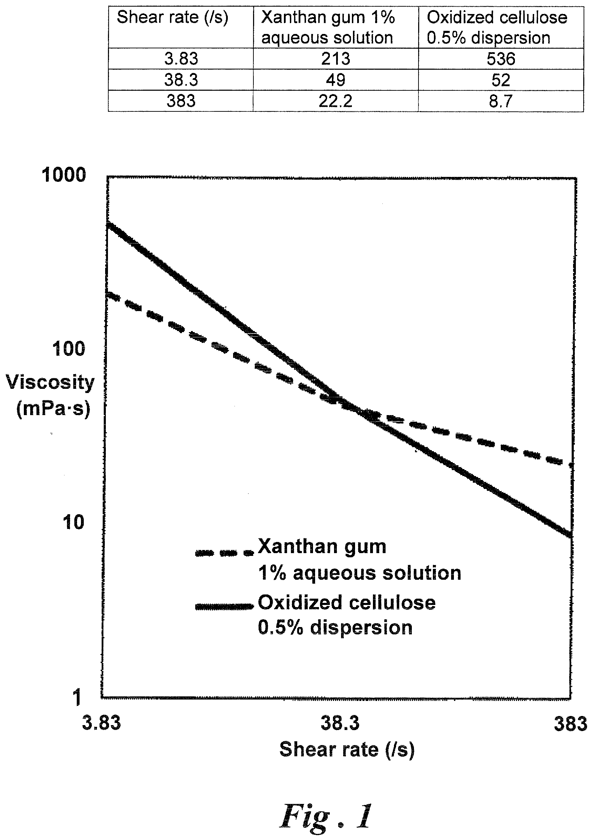

Fig. 1 is a characteristic chart showing the relation between a shear rate and a viscosity in an oxidized cellulose dispersion used in the present invention (Examples 1 to 5) and an aqueous solution of xanthan gum used in Comparative Examples 1, 2, 4 and 6.

DESCRIPTION of THE PREFERRED EMBODIMENTS

The embodiment of the present invention shall be explained below in detail.

The aqueous ink composition for writing instruments according to the present invention is characterized by containing 0.1 to 1.0 % by mass of oxidized cellulose and having a limiting viscosity of 10 mPa·s or less derived from the Casson's equation.

<Oxidized cellulose>

The oxidized cellulose used in the present invention has a cellulose I form crystal structure and is obtained by oxidizing a hydroxyl group (-OH group) at C6-position of $\beta$-glucose constituting cellulose $[(C_6H_{10}O_5)_n$: natural polymer in which numbers of $\beta$-glucose molecules are linearly polymerized via glycosidic bonds] to modify the hydroxyl group to an aldehyde group (-CHO) and a carboxyl group (-COOH group).

The oxidized cellulose used in the present invention comprises fibers obtained by oxidizing the surface of a naturally originating cellulose solid starting material having I form crystal structure and finely pulverizing the material into a nano size. In general, in the naturally originating cellulose which is the staring material, nanofibers called microfibrils are turned into bundles almost without exception to assume a higher order structure, and therefore the cellulose cannot readily be pulverized to a nano size as it is and dispersed. In the oxidized cellulose used in the present invention, a part of hydroxyl groups of the cellulose fibers is oxidized to introduce thereinto an aldehyde group and a carboxyl group, whereby the cellulose is reduced in a hydrogen bonding between the surfaces which is a driving force for a strong cohesive force between the microfibrils, and the oxidized cellulose is subjected to dispersion treatment and pulverized to a nano size.

In the present invention, the effects of the present invention can be exerted by using the oxidized cellulose having the physical properties described above, and the oxidized cellulose having a number average fiber diameter of 2 to 150 nm is preferred.

From the viewpoint of the dispersion stability, the oxidized cellulose has more preferably a number average fiber diameter of 3 to 80 nm. Controlling a number average fiber diameter of the oxidized cellulose to 2 nm or more makes it possible to allow the oxidized cellulose to exert a function of a dispersion medium, and on the contrary, controlling the number average fiber diameter to 150 nm or less makes it possible to further enhance a dispersion stability of the cellulose fibers themselves.

In the present invention, the number average fiber diameter described above can be measured, for example, in the following procedure. That is, the sample prepared by diluting cellulose fibers by adding water thereto is subjected to dispersion treatment, and the dispersion is cast on a grid coated by a carbon film subjected to hydrophilic treatment and observed under a transmission electron microscope (TEM). The number average fiber diameter can be measured and calculated from the image thus obtained.

It can be identified, for example, by the presence of typical peaks at two positions in the vicinity of 2theta = 14 to 17° and the vicinity of 2theta = 22 to 23° in a diffraction profile obtained by measuring a large angle X ray diffraction that cellulose constituting the specific cellulose fibers described above has I form crystal structure originating from the natural product.

The oxidized cellulose used in the present invention can be produced, for example, by at least three steps of an oxidation reaction step in which a natural cellulose used for a starting material is oxidized by the reaction with a co-oxidant in water using an N-oxyl compound as an oxidation catalyst, a workup step in which impurities are removed to obtain reacted fibers impregnated with water, and a dispersion step in which the reacted fibers impregnated with water are dispersed into a solvent.

In the oxidation reaction step described above, a dispersion obtained by dispersing natural cellulose in water is prepared. In the present case, the natural cellulose means refined celluloses isolated from plants, animals, and biosynthetic celluloses such as bacterially produced gels. To be more specific, capable of being listed are celluloses softwood tree pulps, hardwood tree pulps, cotton pulps such as cotton linters and cotton lints, non-wood pulps such as straw pulps, and bagasse pulps, BC (bacterial celluloses), celluloses isolated from sea squirt, celluloses isolated from seaweeds, and the like. However, the cellulose shall not be restricted thereto. The natural cellulose can be enhanced in reaction efficiency and productivity by subjecting preferably to treatment for raising the surface area, beating and the like. Further, when the natural cellulose stored in the condition of never dry after isolated and purified is used, it can still be enhanced in a reaction efficiency since the converged body of the microfibrils stays in a state in which the natural cellulose is liable to be swollen, and it can preferably be reduced in a number average fiber diameter after subjected to pulverizing treatment.

A dispersant for the natural cellulose in the reaction is water, and a concentration of the natural cellulose in a reaction aqueous solution is optional if the concentration is a concentration in which the reagent can sufficiently be diffused, and the concentration is usually about 5% or less based on a weight of the reaction aqueous solution.

Also, a lot of the N-oxyl compounds which can be used as an oxidizing catalyst for cellulose are reported (article entitled "Nitroxide-mediated oxidation of cellulose using TEMPO derivatives: HPSEC and NMR analyses of the oxidized products" by I. Shibata and A. Isogai, Cellulose, Vol. 10, 2003, pp. 335 to 341), and TEMPO (2,2,6,6-tetramethyl-1-piperidine-N-oxyl), 4-acetamide-TEMPO, 4-carboxy-TEMPO, and 4-phosphonoxy-TEMPO are particularly preferred in terms of a reaction rate in water at ambient temperature. A catalytic amount is satisfactory for an addition amount of the above N-oxyl compounds, and they are added to a reaction aqueous solution in a range of preferably 0.1 to 4 mmol/l, more preferably 0.2 to 2 mmol/l.

Co-oxidants, such as hypohalous acid or salts thereof, halous acid or salts thereof, perhalogen acid or salts thereof, hydrogen peroxide, organoperoxy acids are capable of use, and alkali metal hypohalides, for example, sodium hypochlorite and sodium hypobromite are preferred. When sodium hypochlorite is used, the reaction is allowed to proceed preferably in the presence of alkali metal bromide, for example, sodium bromide in terms of the reaction rate. An addition amount of the above alkali metal bromide is about 1- to 40-fold molar amount, preferably about 10- to 20-fold molar amount based on the N-oxyl compound. In general, an addition amount of the co-oxidant is selected in a range of about 0.5 to 8 mmol based on 1 g of the natural cellulose, and the reaction is completed in about 5 to 120 minutes, within up to 240 minutes.

A pH of the reaction aqueous solution is maintained preferably in a range of about 8 to 11. A temperature of the aqueous solution is optional in a range of about 4 to 40°C, and the reaction can be carried out at room temperature and does not have to be controlled particularly in temperature.

Compounds other than reaction product fibers and water which are contained in the reaction slurry, such as unreacted hypochlorous acid, and various byproducts are removed to the outside of the system in the workup step, but since the reaction product fibers are not dispersed usually in pieces of a nanofiber unit at the above stage, a dispersion of the reaction product fibers having a high purity (99% by mass or more) and water is prepared by an ordinary workup method, that is, repeating washing with water and filtering. In the refining method in the above refining step, any equipments may be used as is the case with a method (for example, continuous decanter) carried out by making use of centrifugal dehydration as long as they are equipments by which the object described above can be achieved.

The aqueous dispersion of the reaction product fibers stays in range of about 10 to 50% by mass in terms of solid content (cellulose) concentration in a squeezed state. When the reaction product fibers are dispersed to nanofibers in the subsequent step, a very high energy is required for dispersion if solid content concentration is higher than 50% by mass, and therefore high concentration is not preferred.

Further, in the present invention, the reaction product fibers (aqueous dispersion) impregnated with water obtained in the workup step described above is dispersed in a solvent and subjected to dispersion treatment, whereby a dispersion of the oxidized cellulose can be obtained, and the above dispersion can be dried to prepare the oxidized cellulose to be used.

In this regard, usually the solvent used as the dispersant is preferably water, but in addition to water, alcohols (such as methanol, ethanol, isopropanol, isobutanol, sec-butanol, tert-butanol, methyl cellosolve, ethyl cellosolve, ethylene glycol, and glycerin) which are soluble in water, ethers (such as ethylene glycol dimethyl ether, 1,4-dioxane, and tetrahydrofuran), ketones (acetone and methyl ethyl ketone), N,N-dimethylformamide, N,N-dimethylacetamide, dimethyl sulfoxide, and the like may be used according to the objects. Also, the mixtures of the above compounds can suitably be used. Further, when the reaction product fibers described above are diluted and dispersed by the solvents, the dispersions of the fibers of a nano-level can efficiently be obtained in a certain case by trying stepwise dispersion in which a solvent is added little by little for dispersion. From the viewpoint of operation, the dispersion conditions can be selected so that the state of the dispersion after the dispersion step is viscous or gelatinous. The oxidized cellulose used may be a dispersion of the oxidized cellulose described above.

<Aqueous ink composition for writing instruments>

The aqueous ink composition for writing instruments according to the present invention is characterized by containing the oxidized cellulose described above, and the composition is used, for example, as an ink composition for writing instruments such as aqueous ink ballpoint pens.

In the present invention, content (solid content) of the oxidized cellulose described above is 0.1 to 1.0% by mass (hereinafter referred to merely as %) based on the aqueous ink composition for writing instruments (total amount).

If content of the above oxidized cellulose is less than 0.05%, the satisfactory thickening action is not obtained, and solid matters such as the pigment settle down with the passage of time in certain cases. On the other hand, if content exceeds 1.5%, the limiting viscosity grows high, and therefore a splitting phenomenon of the drawn lines and inferior discharge of the ink are generated in certain cases.

Accordingly, both are not preferred.

At least a colorant and a water-soluble solvent in addition to the oxidized cellulose described above are contained in the aqueous ink composition for writing instruments according to the present invention.

The usable colorant includes pigments and/or water-soluble dyes. The kind of the pigments shall not specifically be restricted, and optional ones selected from inorganic and organic pigments which are conventionally used for writing instruments such as aqueous ink ballpoint pens can be used.

The inorganic pigments include, for example, carbon blacks, and metal powders.

The organic pigments include, for example, azo lakes, insoluble azo pigments, chelated azo pigments, phthalocyanine pigments, perylene and perynone pigments, anthraquinone pigments, quinacridone pigments, dye lakes, nitro pigments, and nitroso pigments. To be specific, capable of being used are phthalocyanine blue (C. I. 74160), phthalocyanine green (C. I. 74260), Hansa yellow 3G (C. I. 11670), diazo yellow GR (C. I. 21100), permanent red 4R (C. I. 12335), brilliant carmine 6B (C. I. 15850), quinacridone red (C. I. 46500), and the like.

Also, plastic pigments constituted from particles of styrene and acryl resins can be used as well. Further, hollow resin particles having voids in the insides of the particles can be used as white pigments, or resin particles (pseudo pigments) colored with basic dyes described later which are excellent in color developability and dispersibility, can be used as well.

All of direct dyes, acid dyes, food dyes and basic dyes can be used as the water-soluble dye.

The direct dyes include, for example, C. I. Direct Blacks 17, 19, 22, 32, 38, 51 and 71, C. I. Direct Yellows 4, 26, 44 and 50, C. I. Direct Reds 1, 4, 23, 31, 37, 39, 75, 80, 81, 83, 225, 226 and 227, and C. I. Direct Blues 1, 15, 71, 86, 106, and 119.

The acid dyes include, for example, C. I. Acid Blacks 1, 2, 24, 26, 31, 52, 107, 109, 110, 119, and 154, C.I. Acid Yellows 7, 17, 19, 23, 25, 29, 38, 42, 49, 61, 72, 78, 110, 127, 135, 141, and 142, C.I. Acid Reds 8, 9, 14, 18, 26, 27, 35, 37, 51, 52, 57, 82, 87, 92, 94, 115, 129, 131, 186, 249, 254, 265, and 276, C.I. Acid Violets 18 and 17, C.I. Acid Blues 1, 7, 9, 22, 23, 25, 40, 41, 43, 62, 78, 83, 90, 93, 103, 112, 113, and 158, and C.I. Acid Greens 3, 9, 16, 25 and 27.

A large part of the food dyes is included in the direct dyes or the acid dyes, and one example which is not included therein includes C.I. Food Yellow 3.

The basic dyes include, for example, C. I. Basic Yellows 1, 2 and 21, C. I. Basic Oranges 2, 14 and 32, C. I. Basic Reds 1, 2, 9 and 14, C. I. Basic Brown 12, and C. I. Basic Blacks 2 and 8.

Also, the resin particles colored with the basic dyes include fluorescent pigments obtained by coloring resin particles of acrylonitrile base copolymers with basic fluorescent dyes. The specific trade names thereof include Sinloihi Color SF series (manufactured by Sinloihi Co., Ltd.), and NKW and NKP series (manufactured by Nippon Fluorescent Chemical Co., Ltd.), and the like.

The above colorants may be used alone respectively or in combination of two or more kinds thereof. Content of the colorant based on total amount of the aqueous ink composition for writing instruments falls in a range of usually 0.5 to 30%, preferably 1 to 15%.

If content of the above colorant is less than 0.5%, the ink composition is weakly colored, or hue of the handwritings becomes indefinite in a certain case. On the other hand, if the colorant is added in excess of 30%, inferior writing is brought about in a certain case. Accordingly, both are not preferred.

The water-soluble organic solvent which can be used includes, for example, glycols such as ethylene glycol, diethylene glycol, triethylene glycol, propylene glycol, polyethylene glycol, 3-butylene glycol, thiodiethylene glycol, and glycerin, ethylene glycol monomethyl ether, diethylene glycol monomethyl ether, and the like and the water-soluble solvent can be used alone or in a mixture. Content of the above water-soluble organic solvents is preferably 5 to 40% based on a total amount of the aqueous ink composition for writing instruments.

The aqueous ink composition for writing instruments according to the present invention can suitably contain, in addition to the oxidized cellulose, the colorant and the water-soluble organic solvent each the described above, a dispersant, a lubricant, a pH modifier, a rust preventive, a preservative or a fungicide, and the like as well as water (such as tap water, refined water, distilled water, ion-exchanged water, and purified water) as a balance which is a solvent, as long as the effects of the present invention are not deteriorated.

When the pigment is used as the colorant, the dispersant is preferably used. The dispersant has an action to adsorb on the surface of the pigment to enhance an affinity thereof with water and disperse stably the pigment in water. Nonionic and anionic surfactants and water-soluble resins are used as the dispersant. Water-soluble polymers are preferably used.

The lubricant includes nonionic surfactants such as fatty acid esters of polyols which are also used as a surface treating agent for pigments, higher fatty acid esters of sugars, polyoxyalkylene higher fatty acid esters, and alkylphosphate esters, anionic surfactants such as alkylallylsulfonate salts of higher fatty acid amides and alkylarylsulfonate salts, and derivatives of polyalkylene glycols, fluorinated surfactants, polyether-modified silicones, and the like.

The pH modifier includes ammonia, urea, monoethanolamine, diethanolamine, triethanolamine, alkali metal salts of carbonic acid and phosphoric acid such as sodium tripolyphosphate, and sodium carbonate, hydrates of alkali metals such as sodium hydroxide, and the like.

Also, the rust preventive includes benzotriazole, tolyltriazole, dicyclohexylammonium nitrite, saponins, and the like and the preservative or the fungicide includes phenol, sodium omadine, sodium benzoate, benzimidazole base compounds, and the like.

The aqueous ink composition for writing instruments according to the present invention can be prepared by suitably combining the oxidized cellulose, the colorant, the water-soluble organic solvent and the other respective components each described above according to the uses of the inks for writing instruments (ballpoint pens, marking pens and the like) to stir and mix them by means of a stirring device such as a homomixer, a homogenizer, and a disperser, and removing, if necessary, coarse particles in the ink composition by filtration or centrifugal separation.

In the case of an aqueous ink ballpoint pen, the ballpoint pen can be prepared by charging an aqueous ink ballpoint pen body equipped with a ball having a diameter of 0.18 to 2.0 mm with the above aqueous ink composition for writing instruments.

The aqueous ballpoint pen body shall not specifically be restricted as long as the pen body is equipped with a ball having a diameter falling in the range described above, and particularly preferred is an aqueous ballpoint pen equipped with a refill having a stainless tip (cemented carbide-made ball) at a point, which is finished by charging an ink reservoir of a polypropylene tube with the aqueous ink composition described above.

Further, in the present invention, the ink having a particularly high viscosity has to be used in order to provide the drawn lines with good quality, and a limiting viscosity of the ink which is derived from Casson's equation has to be controlled to 10 mPa·s or less, more preferably 1 to 10 mPa·s from the viewpoint of preventing a splitting phenomenon which is liable to be brought about when a writing speed becomes fast.

The "limiting viscosity" in the present invention is a viscosity value when a shear rate is infinite, and the limiting viscosity ($\eta\infty$) has been calculated from the following Casson's equation:

$$\tau^{1/2} = (\eta\infty)^{1/2} \cdot D^{1/2} + (\tau_0)^{1/2}$$

[wherein $\tau$: shear stress (Pa); D: shear rate (s$^{-1}$); $\eta\infty$: limiting viscosity (mPa·s); and $\tau_0$: yield value (Pa)].

The shear stress ($\tau$) can be calculated from the shear rate (D) and the measured value (25°C) of the viscosity. The yield value ($\tau_0$) is obtained as the square of the intercept of a linear line which is obtained by plotting the respective square roots of the values of the shear rates - the shear stresses (measured values) measured at two or more points. Also, the limiting viscosity ($\eta\infty$) is determined as a gradient of a linear line obtained by plotting (Casson plot) the square roots of the shear stresses toward the square roots of the shear rates (particularly in a high shear rate region).

The aqueous ink composition for writing instruments according to the present invention is provided with a limiting viscosity falling in the range described above, whereby the good drawn line quality can be achieved even when the ink having a high viscosity is used, or the writing speed becomes fast.

In the present invention, the oxidized cellulose has to be evenly dispersed in order to control the limiting viscosity described above to 10 mPa·s or less. It cannot be dispersed in a sufficiently homogeneous state by a simple device such as a disperser, and it is difficult to control the limiting viscosity to 10 mPa·s or less. The stirring conditions are set to suitable conditions in order to homogeneously disperse the oxidized cellulose by means of, for example, such as a bead mill, a homomixer, a homogenizer, a high-pressure homogenizer, an ultrasonic homogenizer, and a high-pressure wet media-less atomizing device, which can carry out strong shearing, whereby the limiting viscosity can be controlled to 10 mPa·s or less.

A production method for the aqueous ink composition for writing instruments according to the present invention is not specifically different from production methods for other aqueous ink compositions, and the aqueous ink composition of the present invention can be produced by production methods for other aqueous ink compositions.

That is, the aqueous ink composition for writing instruments according to the present invention is obtained by mixing and stirring the respective components including the oxidized cellulose described above, particularly by setting the stirring conditions to suitable conditions by means of a bead mill, a homomixer, a homogenizer, a high-pressure homogenizer, an ultrasonic homogenizer, a high-pressure wet media-less atomizing device, and the like which can carry out strong shearing, whereby a thixotropic ink (for example, an ink for a gel ink aqueous ink ballpoint pen) can be produced.

Also, a pH (25°C) of the aqueous ink composition for writing instruments according to the present invention is controlled preferably to 5 to 10 by a pH modifier from the viewpoints of usability, safety, stability of the ink itself, and a matching property with the ink reservoir, and the pH is controlled more preferably to 6 to 9.5.

The aqueous ink composition for writing instruments according to the present invention is charged into ballpoint pens, marking pens, and the like which are equipped with pen tip parts such as ballpoint pen tips, fiber tips, felt tips, and plastic tips.

The ballpoint pen in the present invention includes pens obtained by charging an ink reservoir (refill) for a ballpoint pen with the aqueous ink composition for writing instruments having the composition described above and charging the above ink reservoir with a substance as an ink follower, wherein the substance is not compatible with the aqueous ink composition stored in the above ink reservoir and has a smaller relative density than the relative density of the above aqueous ink composition, and the substance includes, for example, polybutene, silicone oils, and mineral oils.

The structures of the ballpoint pen and the marking pen shall not specifically be restricted, and structures may be, for example, free ink type ballpoint pens and marking pens which are provided with a collector structure (ink-holding mechanism) in which a holder itself is used as an ink reservoir and in which the aqueous ink composition for writing instruments having the constitution described above is charged in the above holder.

In the aqueous ink composition for writing instruments according to the present invention thus constituted, the oxidized cellulose used shows a high viscosity even at a low viscosity of 0.05 to 1.5% in the aqueous ink composition for writing instruments and shows a high thixotropy index which is inherent to cellulose, and therefore the aqueous ink composition exerts a rheology-controlling effect as a thickener and gelling agent for aqueous ink compositions for writing instruments in a smaller amount than the thickener and the gelling agent of conventional fine cellulose and xanthan gum. In addition thereto, the aqueous ink composition for writing instruments which is excellent in storing stability of particles, a writing property with the passage of time and quality of the drawn lines though having a low viscosity and which is suited to writing instruments such as aqueous ballpoint pens obtained by controlling the limiting viscosity derived from the Casson's equation to 10 mPa·s or less.

EXAMPLES

Next, the present invention shall be explained in further details with reference to examples and comparative examples, but the present invention shall not be restricted to the examples shown below.

[Examples 1 to 5 and Comparative Examples 1 to 9]

The oxidized cellulose having the following physical properties was used to prepare the prescribed amounts of the respective aqueous ink composition for writing instruments according to blend compositions shown in the following Table 1 by mixing and stirring the components by a wet method by means of a high-pressure wet media-less atomizing device (Nano Vater manufactured by Yoshida Kikai Co., Ltd.) while suitably changing stirring conditions (a shearing force, a pressure and a stirring time) and carrying out filtration by a bag filter of 10 μm. The pH values of the respective aqueous ink composition for writing instruments were measured at 25°C by means of a pH meter (manufactured by HORIBA, Ltd.) to find that the aqueous ink compositions fell in a range of 7.9 to 8.2.

The aqueous ink compositions for writing instruments obtained in Examples 1 to 5 and Comparative Examples 1 to 9 were used to measure viscosity values by the following method.

In measuring the viscosity values, the respective inks stored in a glass bottle for a month were used to measure viscosity values at the shear rates of 3.83 s$^{-1}$ and 383 s$^{-1}$ at 25°C by means of an EMD type viscometer (manufactured by Tokyo Keiki Inc.).

Also, the limiting viscosity ($\eta\infty$) was calculated from the Casson's equation shown above. To be specific, the shear stress after 30 seconds since starting measurement of the viscosities at the shear rates of 3.83 s$^{-1}$ and 383 s$^{-1}$ were determined, whereby the limiting viscosity ($\eta\infty$) was calculated.

Next, the aqueous ink compositions for writing instruments obtained in Examples 1 to 5 and Comparative Examples 1 to 9 were used to prepare aqueous ballpoint pens by the following method, and the ballpoint pens were used to evaluate a writing property with the passage of time, a pigment-settling resistance and quality of the drawn lines (line splitting). The results thereof are shown in the following Table 1.

[used Oxidized cellulose]:

An undried sulfurous acid-bleached softwood pulp (comprising principally fibers having a fiber diameter exceeding 1000 nm) corresponding to 2 g in terms of dried weight, 0.025 g of TEMPO and 0.25 g of sodium bromide were dispersed in 150 ml of water, and then a 13 weight% aqueous sodium hypochlorite solution was added thereto so that an amount of sodium hypochlorite was 2.5 mmol based on 1 g of the pulp, whereby the reaction was initiated. A 0.5 M aqueous sodium hydroxide solution was added during the reaction to maintain the pH at 10.5. The reaction was regarded as finished at a point of time when the pH was not observed to be changed, and the reactant was filtrated through a glass filter, followed by repeating five times washing with sufficiently large amount of water and filtration to obtain reaction product fibers impregnated with water having solid content of 25 mass%.

Next, water was added to the above reaction product fibers to prepare 2 mass% slurry, and the slurry was treated for about 5 minutes by means of a rotary blade type mixer. The slurry was increased notably in a viscosity as the treatment advanced, and therefore water was added little by litter to continue the dispersion treatment by the mixer until the solid concentration reached 0.15 mass%. The dispersion of the oxidized cellulose thus obtained having a cellulose concentration of 0.15 mass% was subjected to centrifugal separation to thereby remove floating matters, and then the concentration was modified by water to obtain the transparent and slightly viscous dispersion of the oxidized cellulose having a cellulose concentration of 0.1 mass%. The oxidized cellulose obtained by drying the above dispersion was used. The oxidized celluloses shown in the respective examples and the like in Table 1 were shown in terms of solid concentration of the oxidized celluloses produced in the respective examples and the like.

A number average fiber diameter of the oxidized celluloses obtained above was confirmed and measured by the following method.

<Number average fiber diameter>

A number average fiber diameter of the oxidized cellulose was measured in the following manner.

That is, a sample prepared by diluting the oxidized cellulose by adding water was dispersed for 15 minutes by means of a homomixer at 12000 rpm, and then the dispersion was casted on a grid coated by a carbon film which was subjected to hydrophilic treatment. This was observed under a transmission electron microscope (TEM), and the number average fiber diameter was calculated from the image obtained above to result in finding that the number average fiber diameter was about 140 nm.

<Confirmation of cellulose I form crystal structure>

It was confirmed in the following manner that the oxidized cellulose used had cellulose I form crystal structure.

That is, it was confirmed that the oxidized cellulose had I form crystal structure since in a diffraction profile obtained by measuring a large angle X ray diffraction, typical peaks are present in two positions in the vicinity of 2 theta = 14 to 17° and the vicinity of 2 theta = 22 to 23°.

Preparation of aqueous ink ballpoint pens:

The respective aqueous ink compositions obtained above were used to prepare aqueous ballpoint pens. To be specific, a holder of a ballpoint pen (trade name: Signo UM-100, manufactured by Mitsubishi Pencil Co., Ltd.) was used to charge each of the inks described above into a refill comprising a polypropylene-made ink reservoir having an inner diameter of 4.0 mm and a length of 113 mm, a stainless steel-made tip (cemented carbide ball, ball diameter: 0.7 mm), and a joint connecting the above reservoir with the tip, and an ink follower comprising a mineral oil as a principal component was loaded at a rear end of the ink, whereby an aqueous ink ballpoint pen was prepared.

Evaluation method of writing property with the passage of time:

The respective aqueous ballpoint pens obtained were left standing at 50°C for a week and then used for writing, and the writing properties were evaluated according to the following evaluation criteria.

Evaluation criteria:

◎: no problems are observed in writing

○: blurring was observed a little in the beginning of writing, but no problems are observed after that

△: drawn lines are a little blurred and pale

×: not writable

Evaluation method of pigment-settling resistance:

The respective aqueous ink compositions obtained above were set in a test tube and subjected to centrifugal separation treatment for 10 minutes at 5000 rpm, and then the ink in the test tube was divided into an upper side and a lower side to evaluate them according to the following evaluation criteria.

Evaluation criteria:

◎: no difference in intensity between upper and lower sides

○: a little difference is observed when they are placed side by side to exhibit colors, but to such an extent that the difference is scarcely found

△: difference is observed between the upper and lower sides, but the intensity is maintained to some extent

×: apparently, the upper side is pale, and the lower side is deep. The drawn state was visually evaluated.

Evaluation method of quality of the drawn lines (line splitting):

The ink compositions were filled in the aqueous ink ballpoint pens described above in Examples 1 to 3 and 5 and Comparative Examples 1 to 5 and 7 to 9 and in ballpoint pens for correction tools CLN-250 (manufactured by Mitsubishi Pencil Co., Ltd.) in Example 4 and Comparative Example 6, and the respective aqueous ink ballpoint pens and ballpoint pens for correction tools were used to write on a paper for a writing test by hand and evaluate the states thereof (line splitting) according to the following criteria.

Evaluation criteria:

◎: no line splitting is observed

○: slight line splitting is observed, but to such an extent that the line splitting is not outstanding

×: line splitting is clearly observed

Table 1

(total amount: 100 % by mass)

| | | Example 1 | Example 2 | Example 3 | Example 4 | Example 5 | Comparative Example 1 | Comparative Example 2 |
|---|---|---|---|---|---|---|---|---|
| Pigment | FUJI RED 2510 (manufactured by Fuji Pigment Co., Ltd.) | 8 | 8 | 8 | | 8 | 8 | 8 |
| | Titanium oxide KR-380N (manufactured by Titan Kogyo, Ltd.) | | | | 15 | | | |
| Pigment dispersant | JONCRYL 61J (manufactured by BASF Japan Ltd.) | 6 | 6 | 6 | 6 | 6 | 6 | 6 |
| Thickener | Oxidized cellulose | 0.19 | 0.3 | 0.18 | 0.35 | 0.1 | | |
| | Xanthan gum KELSAN S (manufactured by Sansho Co., Ltd.) | | | | | | 0.3 | 0.37 |
| | HIVISWAKO #105 (manufactured by Wako Pure Chemical Industries, Ltd.) | | | | | | | |
| | Carboxymethyl cellulose (CMC,Sunrose F30MC, manufactured by Nippon Paper Industries Co., Ltd.) | | | | | | | |
| Lubricant | RD-510Y (manufactured by Toho Chemical Industry Co., Ltd.) | 0.5 | 0.5 | 0.5 | 0.5 | 0.5 | 0.5 | 0.5 |
| Antiseptic agent | Bioden 421 (manufactured by Nippon Soda Co., Ltd.) | 0.2 | 0.2 | 0.2 | 0.2 | 0.2 | 0.2 | 0.2 |
| Rust preventive | Benzotriazole | 0.3 | 0.3 | 0.3 | 0.3 | 0.3 | 0.3 | 0.3 |
| pH modifier | Triethanolamine | 1.4 | 1.4 | 1.4 | 1.4 | 1.4 | 1.4 | 1.4 |
| Water-soluble organic solvent | Propylene glycol | 15 | 15 | 15 | 15 | 15 | 15 | 15 |
| Water | Ion-exchanged water | 68.41 | 68.3 | 68.42 | 61.25 | 68.5 | 68.3 | 68.23 |
| Viscosity (mPa·s) | 3.83/s | 614 | 1434 | 397 | 2278 | 164 | 602 | 1370 |
| | 383/s | 18 | 25 | 19 | 39 | 14 | 29 | 49 |
| Limiting viscosity (mPa·s) | | 4 | 2 | 7 | 3 | 7 | 11 | 13 |
| Writing property with passage of time | | ◎ | ◎ | ◎ | ◎ | ○ | × | ○ |
| Pigment-settling resistance | | ◎ | ◎ | ◎ | ◎ | ○ | △ | ○ |
| Quality of the drawn lines (line splitting) | | ◎ | ◎ | ◎ | ◎ | ◎ | × | × |

Table 1 (Continued)

(total amount: 100 % by mass)

| | | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|
| Pigment | FUJI RED 2510 (manufactured by Fuji Pigment Co., Ltd.) | 8 | 8 | 8 | | 8 | 8 | 8 |
| | Titanium oxide KR-380N (manufactured by Titan Kogyo, Ltd.) | | | | 15 | | | |
| Pigment dispersant | JONCRYL 61J (manufactured by BASF Japan Ltd.) | 6 | 6 | 6 | | 6 | 6 | 6 |
| Thickener | Oxidized cellulose | | | | | 0.003 | 1.8 | 1.3 |
| | Xanthan gum KELSAN S (manufactured by Sansho Co., Ltd.) | | 0.2 | | 0.4 | | | |
| | HIVISWAKO #105 (manufactured by Wako Pure Chemical Industries, Ltd.) | 0.25 | | | | | | |
| | Carboxymethyl cellulose (CMC, Sunrose F30MC, manufactured by Nippon Paper Industries Co., Ltd.) | | | 0.8 | | | | |
| Lubricant | RD-510Y (manufactured by Toho Chemical Industry Co., Ltd.) | 0.5 | 0.5 | 0.5 | 0.5 | 0.5 | 0.5 | 0.5 |
| Antiseptic agent | Bioden 421 (manufactured by Nippon Soda Co., Ltd.) | 0.2 | 0.2 | 0.2 | 0.2 | 0.2 | 0.2 | 0.2 |
| Rust preventive | Benzotriazole | 0.3 | 0.3 | 0.3 | 0.3 | 0.3 | 0.3 | 0.3 |
| pH modifier | Triethanolamine | 1.4 | 1.4 | 1.4 | 1.4 | 1.4 | 1.4 | 1.4 |
| Water-soluble organic solvent | Propylene glycol | 15 | 15 | 15 | 15 | 15 | 15 | 15 |
| Water | Ion-exchanged water | 68.35 | 68.4 | 67.8 | 67.2 | 68.597 | 66.8 | 67.3 |
| Viscosity (mPa·s) | 3.83/s | 371 | 358 | 102 | 2151 | 38 | 13421 | 8603 |
| | 383/s | 55 | 23 | 83 | 64 | 9 | 216 | 154 |
| Limiting viscosity (mPa·s) | | 37 | 10 | 81 | 14 | 7 | 13 | 12 |
| Writing property with passage of time | | △ | × | △ | △ | × | ○ | ○ |
| Pigment-settling resistance | | △ | × | × | ○ | ○ | ◎ | ◎ |
| Quality of the drawn lines (line splitting) | | × | ◎ | × | × | ◎ | × | × |

EP 3 053 970 B1

As apparent from the results summarized in Table 1 shown above, it has become clear that the aqueous ink compositions for writing instruments prepared in Examples 1 to 5 according to the present invention are maintained in satisfactory writing property with the passage of time, free of a pigment-settling property and excellent in quality of the drawn lines.

To individually observe the comparative examples, the xanthan gum was used in Comparative Examples 1, 2, 4 and 6; the carboxyvinyl polymer was used in Comparative Example 3; the carboxymethyl cellulose was used in Comparative Example 5; content of the oxidized cellulose is out of the scope of present invention in Comparative Examples 7 to 9.

It has become clear that in the above cases, the satisfactory results are not obtained in any of writing property with the passage of time, the pigment-settling resistance and quality of the drawn lines.

Test Example 1:

The relation of the shear rate with the viscosity in the oxidized cellulose used in the present invention (Examples 1 to 5) and the xanthan gum used in Comparative Examples 1, 2, 4 and 6 was examined. That is, a xanthan gum aqueous solution of 1% and an oxidized cellulose dispersion of 0.5% were prepared to measure the viscosities at the shear rates of 3.83 s$^{-1}$, 38.3 s$^{-1}$ and 383 s$^{-1}$ by means of an EMD type viscometer (manufactured by Toki Sangyo Co., Ltd.). The results thereof are shown in Fig. 1.

Observing the results shown in Fig. 1, it has been found that both the oxidized cellulose and the xanthan gum show pseudoplastic flow in which a viscosity is decreased as a shear rate is increased and that the oxidized cellulose used in the present invention shows a high viscosity in standing still but shows a flow characteristic in which a viscosity is extremely reduced in flowing and is changed in behavior to a large extent.

Comprehensively examining the results summarized in Table 1 and the results shown in Fig. 1 each described above, it has become clear that the aqueous ink compositions for writing instruments which contain the oxidized cellulose and have a limiting viscosity of 10 mPa·s or less derived from the Casson's equation are excellent in storage stability of the particles, a writing property with the passage of time and quality of the drawn lines, though having a low viscosity, as compared with aqueous ink compositions containing conventional thickener and gelling agents such as xanthan gum.

Industrial Applicability

Obtained is an aqueous ink composition for writing instruments which is suited to writing instruments such as aqueous ink ballpoint pens, and marking pens.

## Claims

1. An aqueous ink composition for a writing instrument comprising 0.1 to 1.0% by mass of an oxidized cellulose and having a limiting viscosity of 10 mPa·s or less derived from Casson's equation.

2. The aqueous ink composition for a writing instrument as described in claim 1, wherein the oxidized cellulose has a number average fiber diameter of 2 to 150 nm.

3. A writing instrument charged with the aqueous ink composition for a writing instrument as described in claim 1 or 2.

## Patentansprüche

1. Eine wässrige Tintenzusammensetzung für ein Schreibgerät, umfassend 0.1 bis 1.0 Massen-% einer oxidierten Zellulose und aufweisend eine Grenzviskosität von 10 mPa·s oder weniger, wie aus der Gleichung nach Casson abgeleitet.

2. Die wässrige Tintenzusammensetzung für ein Schreibgerät, wie in Anspruch 1 beschrieben, wobei die oxidierte Zellulose ein Zahlenmittel des Faserdurchmessers von 2 bis 150 nm aufweist.

3. Ein Schreibgerät, das mit der wässrigen Tintenzusammensetzung für ein Schreibgerät, wie in Anspruch 1 oder 2 beschrieben, befüllt ist.

**EP 3 053 970 B1**

**Revendications**

1. Une composition d'encre aqueuse pour un instrument d'écriture comprenant 0,1 à 1,0% en masse d'une cellulose oxydée et ayant une viscosité limitante de 10 mPa·s ou moins selon l'équation de Casson.

2. La composition d'encre aqueuse pour un instrument d'écriture tel que décrit dans la revendication 1, dans laquelle la cellulose oxydée a une valeur moyenne de diamètre de fibre de 2 à 150 nm.

3. Un instrument d'écriture chargé avec la composition d'encre aqueuse pour un instrument d'écriture tel que décrit dans la revendication 1 ou 2.

13

| Shear rate (/s) | Xanthan gum 1% aqueous solution | Oxidized cellulose 0.5% dispersion |
|---|---|---|
| 3.83 | 213 | 536 |
| 38.3 | 49 | 52 |
| 383 | 22.2 | 8.7 |

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP SHO5974175 B
- JP SHO62124170 B
- JP 2002235025 A

- JP 2013091730 A
- JP 2013181167 A

### Non-patent literature cited in the description

- **I. SHIBATA ; A. ISOGAI.** Nitroxide-mediated oxidation of cellulose using TEMPO derivatives: HPSEC and NMR analyses of the oxidized products. *Cellulose,* 2003, vol. 10, 335-341